Europäisches Patentamt

European Patent Office

Office européen des brevets

(19)

(11) **EP 1 342 830 A1**

(12) ## DEMANDE DE BREVET EUROPEEN

(43) Date de publication:
**10.09.2003 Bulletin 2003/37**

(51) Int Cl.⁷: **D06N 7/00**, D06N 3/00,
B32B 27/12, B63C 9/06

(21) Numéro de dépôt: **03100503.6**

(22) Date de dépôt: **28.02.2003**

(84) Etats contractants désignés:
**AT BE BG CH CY CZ DE DK EE ES FI FR GB GR
HU IE IT LI LU MC NL PT SE SI SK TR**
Etats d'extension désignés:
**AL LT LV MK RO**

(30) Priorité: **04.03.2002 FR 0202700**

(71) Demandeur: **TISSUS TECHNIQUES DE TREVOUX
F-01600 Trevoux (FR)**

(72) Inventeurs:
 • **Aubry, Martine
  69126, Brindas (FR)**

 • **Blondelet, Philippe
  28300, Mainvilliers (FR)**
 • **Slaviero, Myriam
  69560, St. Romain en Gal (FR)**

(74) Mandataire: **Palix, Stéphane et al
Cabinet Laurent et Charras,
20, rue Louis Chirpaz,
BP 32
69134 Ecully Cedex (FR)**

(54) **Matériau en feuille pour la protection de personnes placées dans des conditions de survie**

(57) Matériau en feuille pour la protection de personnes placées dans des conditions de survie, constitué par un complexe à base d'une matière plastique renforcée par une matière textile.

Il se **caractérise** en ce que :

- il comporte deux couches externes en matière plastique disposées de part et d'autre de l'armature textile et intimement liées l'une à l'autre ;
- ces deux couches externes sont de couleur différente, l'une présentant un contraste maximum avec le milieu d'utilisation et étant destinée à constituer la couche visible de l'extérieur, l'autre, constituant la face interne de l'abri et étant réalisée dans un coloris sélectionné dans les teintes froides avec un niveau d'éclairage faible ;
- la structure textile de renfort et les couches externes en matière plastique ont une structure telle qu'elles laissent passer la lumière tout en éliminant toutes les radiations colorées du spectre visible émises par la couche visible de l'extérieur et pouvant avoir un effet néfaste sur la concentration et le calme des personnes protégées.

**Fig. 1**

## Description

### Domaine Technique

La présente invention concerne un perfectionnement apporté aux matériaux en feuille permettant la réalisation d'un abri pour assurer la protection de personnes placées dans des conditions précaires, de survie notamment.

Elle a trait plus particulièrement à un nouveau type de matériau en feuille constitué par un complexe à base de matière plastique renforcé par une armature textile.

### Techniques antérieures

Pour réaliser la protection de personnes en détresse, notamment suite à un naufrage, application pour laquelle l'invention sera développée ultérieurement, on a proposé d'associer au radeau de survie une "tente" constituée en général d'une feuille textile enduite de matière plastique, PVC par exemple.

Les caractéristiques techniques de la toile enduite destinée à constituer la tente sont définies selon les normes ISO 15372:2000 et TR 6065:1991.

D'une manière générale, les principaux problèmes qui se posent avec ces matériaux résident dans le fait que d'une part, ils doivent assurer la protection des personnes, et par suite être isolants et imperméables et, d'autre part, être facilement repérables de l'extérieur.

En conséquence, les toiles enduites pour réaliser de tels abris doivent avoir une coloration extérieure qui contraste avec le milieu d'utilisation.

En général, afin de contraster avec le milieu marin, la toile des tentes d'un canot destiné à être utilisé par la personne en péril, est en général de couleur orange vif faisant un contraste avec la couleur du milieu marin qui varie entre le bleu et le gris.

Un tel coloris orangé s'adapte non seulement au milieu marin, mais est également très contrasté avec les autres milieux terrestres, par exemple avec la montagne, recouverte ou non de neige, au milieu forestier ou autres.

### Exposé de l'invention

Le Demandeur a constaté que si de tels tissus enduits de couleur orangée remplissaient donc les conditions techniques prescrites par les normes, et étaient facilement repérables de l'extérieur, qu'en revanche, se posait un problème qui, a priori, n'a jamais été examiné à ce jour.

En effet, il a été constaté que les tissus enduits conventionnels posaient un problème subjectif.

En effet, de tels tissus doivent laisser passer la lumière pour assurer le confort des personnes. Il s'avère en pratique que les tissus orangés utilisés à ce jour posent un problème, que l'on pourrait qualifier de physiologique, qui est que la lumière qui diffuse à l'intérieur de l'abri est également colorée en orange.

Or de nombreuses études effectuées notamment dans le domaine hospitalier, ont montré que la couleur d'un lieu avait une grande influence sur le comportement d'une personne.

Or on a trouvé, et c'est ce qui fait l'objet de la présente invention, un nouveau type de matériau en feuille, constitué par un complexe à base d'une matière plastique renforcée par une armature textile qui, non seulement, répond aux conditions techniques (résistance mécanique, non détérioration lors du stockage, imperméabilité, protection thermique et contraste avec le milieu environnant pour en faciliter le repérage), mais qui, également, présente des caractéristiques telles qu'il permet d'apaiser, favorise la maîtrise de soi et la concentration de la personne ainsi placée dans des conditions de survie.

Pour ce faire, le matériau conforme à l'invention se caractérise en ce que :

- il comporte deux couches externes en matière plastique disposées de part et d'autre de l'armature textile et intimement liées l'une à l'autre ;
- ces deux couches externes sont de couleurs différentes, l'une présentant un contraste maximum avec le milieu d'utilisation et étant destinée à constituer la couche visible de l'extérieur, l'autre, constituant la face interne de l'abri et étant réalisée dans un coloris sélectionné dans les teintes froides avec un niveau d'éclairage faible ;
- la structure textile de renfort et les couches externes en matière plastique ont une structure telle qu'elles laissent passer la lumière tout en éliminant toutes les radiations colorées du spectre visible émises par la couche visible de l'extérieur et pouvant avoir un effet néfaste sur la concentration et le calme des personnes protégées.

Selon une forme préférentielle conforme à l'invention, la couche visible de l'extérieur sera sélectionnée dans la gamme des teintes orangé-jaune diamétralement opposée au bleu-vert de la mer, la couche interne étant, quant à elle, sélectionnée dans les teintes claires, et de préférence dans une teinte bleu clair.

### Description sommaire des dessins

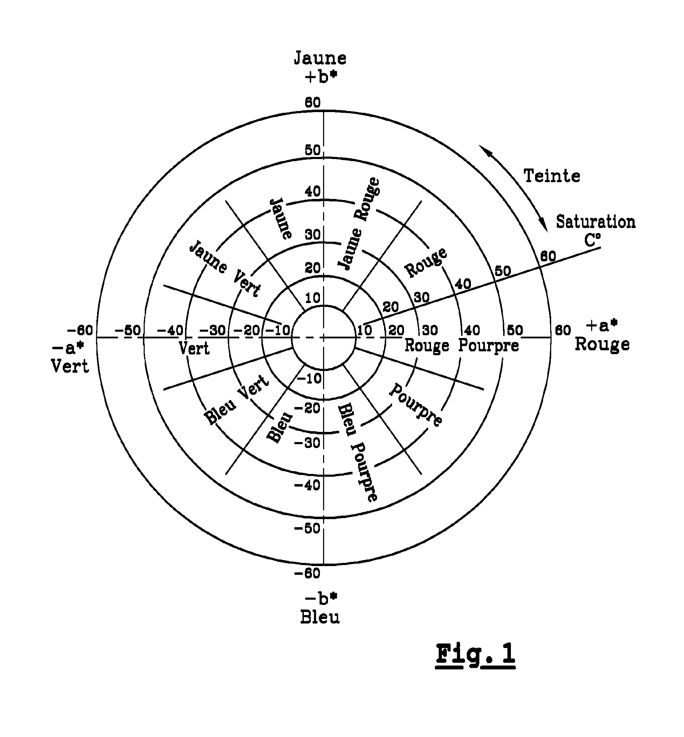

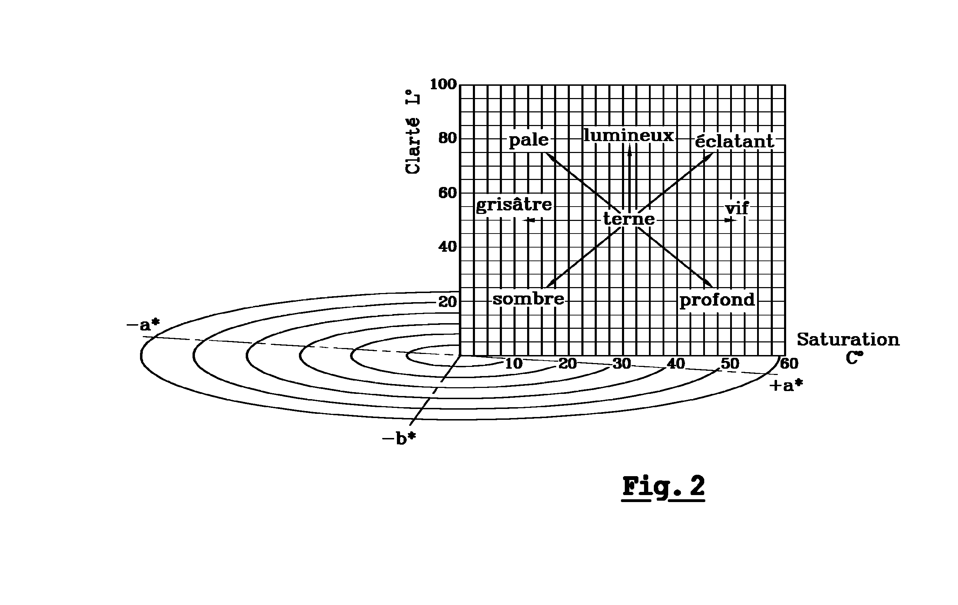

Les figures 1 et 2 annexées illustrent schématiquement le cercle chromatique de l'espace couleur, chaque couleur étant définie par trois composantes L\*, a\*, b\* donnant la clarté, la teinte (h\*) et la saturation (c\*) pour un coloris.

### Manière de réaliser l'invention

Les différents points caractéristiques du matériau réalisé conformément à l'invention, sont obtenus par une sélection appropriée des couleurs et des matériaux constituant les couches externes du complexe ainsi que par la nature de la structure textile de renforcement.

Tout d'abord, concernant la structure textile de renforcement, si elle peut être réalisée à partir d'un tissu relativement clos mais permettant cependant de laisser passer la lumière, elle sera cependant de préférence constituée par une grille textile non tissée.

Par rapport à un tissu conventionnel, le choix d'une grille permet d'obtenir une meilleure diffusion de la lumière à l'intérieur de l'abri tout en ayant une structure dont l'épaisseur est égale à un tissu ne comportant qu'une couche d'enduction, alors que selon l'invention, le matériau comporte deux couches d'enduction différentes.

Concernant les couches externes disposées de part et d'autre de cette structure textile, elles seront à base d'une matière plastique, notamment de PVC, comportant des pigments ainsi que des charges afin que lesdites couches laissent diffuser la lumière à l'intérieur de l'abri réalisé à partir de ce matériau tout en constituant une barrière aux radiations colorées du spectre visible.

La réalisation du complexe sera effectuée par toute technique connue d'enduction ou de complexage d'une structure textile avec un matériau plastique sous forme de plastisol.

Il peut par exemple être envisagé de réaliser l'association directement lors de l'extrusion d'un film thermoplastique, par exemple conformément aux enseignements du brevet GB 1 098 381.

Il est possible, par exemple d'extruder de part et d'autre d'une grille textile non tissée deux films et de réaliser donc en une seule opération le complexe, ou alors de procéder en deux étapes, l'une consistant à associer la structure textile de renfort lors de l'extrusion d'un seul film thermoplastique, puis à recouvrir l'autre face par enduction conventionnelle.

Concernant les couleurs du complexe, pour la face interne, elles seront donc sélectionnées parmi les teintes dites "froides" avec un niveau d'éclairage faible, à savoir les teintes pastel, claires, qui évoquent la joie.

Le blanc est à proscrire car il entraîne fréquemment un effet soporifique et peut également donner une impression de claustration, ainsi que toutes les couleurs chaudes qui sont dynamisantes et excitantes.

Parmi les teintes préférées, on peut utiliser une couleur vert pastel ayant un effet psychologique positif (calme, repos, fraîcheur, pacifisme), ainsi que le bleu clair (frais, calme, léger et transparent).

Selon une forme préférentielle, le bleu clair sera choisi, car il a été constaté qu'il présentait comme avantages :

d'avoir un effet calmant sur le système nerveux central et le système respiratoire,

d'entraîner une diminution de la pression sanguine ; d'induire un état de paix et de tranquillité et de favoriser la méditation ; et de faire apparaître les espaces plus grands.

Concernant la face externe, cette dernière est donc soumise à un éclairage naturel, et plus spécifiquement, dans certains cas, à un éclairement direct par le soleil alors que la surface est imposée, à savoir plus particulièrement l'eau de mer.

Par ailleurs, la couleur de cette face externe ne doit avoir aucune influence sur l'individu et ne doit pas interférer avec celle de l'intérieur, même par transparence.

Cette couleur sera, conformément à l'invention, une couleur complémentaire à celle de la mer, c'est-à-dire une couleur qui est diamétralement opposée sur le cercle chromatique.

A ce jour, la couleur adoptée pour constituer la face visible du complexe est sélectionnée dans les coloris orange qui sont les plus appropriés pour contraster avec les teintes de la mer, et en général avec n'importe quel milieu.

Or, conformément à l'invention, il a été constaté qu'une sélection appropriée dans la gamme des coloris orange était plus particulièrement adaptée, à savoir de choisir une couleur diamétralement opposée au coloris bleu-vert de la mer, c'est-à-dire, pour cette face externe, un coloris orangé-jaune.

Le choix d'un tel coloris a été déterminé dans une analyse approfondie de la comparaison de deux couleurs complémentaires faisant ressortir chacune d'elles de façon particulière.

Cette caractérisation et comparaison des deux couleurs, à savoir les coloris orange qui sont les plus appropriés pour contraster avec les teintes de la mer (bleu-vert), ont été réalisées en mettant en oeuvre le système colorimétrique établi par la Commission Internationale de l'Eclairage (CIE), adopté en 1976 et dénommé "*CIELAB*".

Un tel système colorimétrique permet de positionner une couleur dans un repère orthonormé (a,b) en tenant compte de la teinte et de la saturation.

Ainsi que cela ressort des deux figures annexées, la première (figure 1) définit l'espace de couleur et se présente sous la forme d'un disque d'axe -a*, +a* du vert au rouge, et -b*, +b* du bleu au jaune.

Un axe perpendiculaire au disque indique la clarté L* de la couleur (figure 2).

Selon cette méthode, on détermine que la couleur diamétralement opposée au bleu-vert de la mer est donc l'orangé- jaune.

Une telle solution peut être exprimée mathématiquement par le fait que la différence d'angle de teinte pour être optimale, doit être de 180°.

A ce jour, l'orangé sélectionné pour réaliser le coloris de la tente qui est associée à la plupart des radeaux de survie et le coloris orange pour lequel :

$a* = 52,37$, $b* = 37,99$

soit $h^0_{ab}$ =0,63 rad ~35,96°
conduisant à une saturation $c^*_{ab}$ =64,7
la clarté L* étant quant à elle égale à 51,54.

Si l'on considère que la mer peut être simulée par un coloris bleu turquoise ayant comme définition :

$a*=-17,94$, $b*=-35,69$

soit $h^0_{ab}$ =1,1 rad ~63,3°
conduisant à une saturation $c^*_{ab}$ =40,
la clarté L* étant égale dans ce cas à 58,81.

On obtient donc un écart de teinte h° entre le bleu turquoise et l'orange égal à 152,6°.

Il a été déterminé que l'on obtenait une amélioration du contraste en choisissant comme coloris orange le coloris orange-jaune, dont les caractéristiques sont:

$a* = 23,60$, $b* = 58,06$

soit $h^0_{ab}$ =1,18 rad ~ 67,9°
conduisant à une saturation $c^*_{ab}$ =62,7
la clarté L* étant égale à 64,61.

Par suite, l'écart de teinte h° entre le bleu turquoise simulant la mer et ce nouvel orange-jaune sélectionné est égal à 184,6°, qui peut être considéré comme étant pratiquement optimal.

**Exemple**

On réalise un complexe conforme à l'invention, soit en extrudant de part et d'autre d'une grille textile non tissée deux films à base de PVC, soit après association d'une grille avec un film de PVC, en réalisant une enduction conventionnelle sur la face de la grille non recouverte de PVC, de manière à constituer les couches extérieures du complexe.

La grille textile est une grille réalisée à partir de fils de polyester haute ténacité ayant un titre de 550 dtex qui forment entre eux des jours de forme carrée de 0,3cm de côté.

Cette grille pèse 60 g/m². Cette grille est donc recouverte sur ses deux faces de couches externes en matière plastique intimement liées l'une à l'autre.

Ces deux couches externes sont donc de couleur différente, l'une présentant un contraste maximum avec le milieu d'utilisation et étant destinée à constituer la couche visible de l'extérieur, l'autre, constituant la face interne de l'abri étant réalisée dans un coloris sélectionné dans les teintes froides avec un niveau d'éclairage faible.

Pour ce faire, en vue de réaliser la couche extérieure, on utilise une composition de plastisol colorée en orangé-jaune, déposée à raison de 160 g/m² et dont la composition est la suivante, en parties

PVC émulsion : 100
Plastifiants : 70 pcr (pcr signifiant pour cent partie de résine)
Charges : 33 pcr
Stabilisants : 2 pcr
Coloration orangé-jaune par mélange de deux pigments : 11 pcr.

La face destinée à constituer la couche interne de la grille est, quant à elle, réalisée à partir d'une composition de plastisol coloré en bleu clair par un mélange de quatre pigments.

La composition est déposée à raison de 130 g/m², et a la formulation suivante, en partie en poids:

PVC émulsion : 100
Plastifiants : 68 pcr
Charges : 33 pcr
Stabilisants : 2 pcr
Mélange de quatre pigments : 9 pcr.

Ces compositions forment de part et d'autre de la grille textile deux couches intimement liées l'une à l'autre, le complexe final pesant 350 g/m² et ayant une épaisseur globale de l'ordre de 0,3 mm.

Un tel matériau complexe est souple, remplit toutes les conditions exigées par les normes ISO 15372: 2000 et TR 6065:1991 en ce qui concerne les paramètres techniques.

Par ailleurs, il est particulièrement adapté pour réaliser des abris de protection, par exemple des tentes pour personnes placées dans des conditions de survie, et notamment en milieu marin, grâce au choix particulier des coloris de ses deux faces externes.

**Revendications**

1. Matériau en feuille pour la protection de personnes placées dans des conditions de survie, constitué par un complexe à base d'une matière plastique renforcée par une matière textile, **caractérisé en ce que** :

   - il comporte deux couches externes en matière plastique disposées de part et d'autre de l'armature textile et intimement liées l'une à l'autre ;
   - ces deux couches externes sont de couleur différente, l'une présentant un contraste maximum avec le milieu d'utilisation et étant destinée à constituer la couche visible de l'extérieur, l'autre, constituant la face interne de l'abri et étant réalisée dans un coloris sélectionné dans les teintes froides avec un niveau d'éclairage faible ;

- la structure textile de renfort et les couches externes en matière plastique ont une structure telle qu'elles laissent passer la lumière tout en éliminant toutes les radiations colorées du spectre visible émises par la couche visible de l'extérieur et pouvant avoir un effet néfaste sur la concentration et le calme des personnes protégées.

2. Matériau selon la revendication 1, **caractérisé en ce que** la couche visible de l'extérieur est sélectionnée dans la gamme des teintes orange-jaune diamétralement opposé au bleu-vert de la mer, la couche interne étant, quant à elle, sélectionnée dans les teintes claires, et de préférence dans une teinte bleu clair.

3. Matériau selon l'une des revendications 1 et 2, **caractérisé en ce que** l'armature textile est constituée par une grille non tissée.

**Fig.1**

6

**<u>Fig.2</u>**

**Office européen des brevets**

## RAPPORT DE RECHERCHE EUROPEENNE

Numéro de la demande

EP 03 10 0503

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | DE 196 33 211 A (CONTITECH ELASTOMER BESCHICHTU) 19 février 1998 (1998-02-19) * le document en entier * --- | 1,2 | D06N7/00 D06N3/00 B32B27/12 B63C9/06 |
| Y | GB 2 231 844 A (BRITISH OFFSHORE ENG TECH) 28 novembre 1990 (1990-11-28) * page 1, alinéa 1; figures * * page 6, alinéa 2 * * page 8, dernier alinéa – page 9, alinéa 1 * --- | 1,2 | |
| A | US 4 187 570 A (DE SIMONE DAVID N) 12 février 1980 (1980-02-12) * colonne 1, ligne 44 – ligne 48; figures * * colonne 4, ligne 6 – ligne 11 * * colonne 4, ligne 32 – ligne 34 * --- | 1-3 | |
| A | ES 2 003 812 A (VALLCORBA TURA) 16 novembre 1988 (1988-11-16) * le document en entier * --- | 1-3 | DOMAINES TECHNIQUES RECHERCHES (Int.Cl.7) |
| A | DE 197 29 719 A (BOCK MANFRED) 12 février 1998 (1998-02-12) * le document en entier * --- | | D06N B32B B63C |
| A | DATABASE WPI Section PQ, Week 199948 Derwent Publications Ltd., London, GB; Class P34, AN 1999-564775 XP002223172 & JP 11 244384 A (NAKATA T), 14 septembre 1999 (1999-09-14) * abrégé * ----- | | |

Le présent rapport a été établi pour toutes les revendications

| Lieu de la recherche | Date d'achèvement de la recherche | Examinateur |
|---|---|---|
| LA HAYE | 2 juin 2003 | Pamies Olle, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 10 0503

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-06-2003

| Document brevet cité au rapport de recherche | | Date de publication | Membre(s) de la famille de brevet(s) | | Date de publication |
|---|---|---|---|---|---|
| DE 19633211 | A | 19-02-1998 | DE | 19633211 A1 | 19-02-1998 |
| GB 2231844 | A | 28-11-1990 | AUCUN | | |
| US 4187570 | A | 12-02-1980 | AUCUN | | |
| ES 2003812 | A | 16-11-1988 | ES | 2003812 A6 | 16-11-1988 |
| DE 19729719 | A | 12-02-1998 | DE | 19729719 A1 | 12-02-1998 |
| JP 11244384 | A | 14-09-1999 | AUCUN | | |

EPO FORM P0460